# EUROPÄISCHE PATENTANMELDUNG

(11) **EP 2 353 838 A2**
(43) Veröffentlichungstag der Anmeldung: **10.08.2011**
(21) Anmeldenummer: 11152501.0
(22) Anmeldetag: 28.01.2011
(51) Int. Cl.: B29C 45/40, B29C 45/67, B29C 45/82

(54) **Spritzgießmaschine sowie hydraulische Antriebseinheit hierfür**

(30) Priorität: 04.02.2010 DE 102010001595
(71) Anmelder: Sumitomo (SHI) Demag Plastics Machinery GmbH, 90571 Schwaig (DE)
(72) Erfinder: Grunitz, Otto, 90451, Nürnberg (DE)
(74) Vertreter: Rau, Schneck & Hübner

(57) **Zusammenfassung**

Eine Spritzgießmaschine umfasst
- eine Einspritzeinheit mit einer Plastifizierschnecke und Antriebseinheiten für die Bewegung der Einspritzeinheit und den Einspritz- und Nachdruckhub der Plastifizierschnecke,
- eine feste und eine bewegliche Werkzeugaufspannplatte,
- eine Formschlusseinheit mit einer Antriebseinheit zur Erzeugung der Formschließ- und -öffnungsbewegung der beweglichen Werkzeugaufspannplatte und der Werkzeug-Schließkraft beim Einspritzen, und
- eine Antriebseinheit für eine Werkstück-Auswerfereinrichtung, wobei mindestens eine der Antriebseinheiten eine hydraulische Antriebseinheit mit einer Hydraulikpumpe, einem Hydraulikzylinder und einem oder mehreren Steuerventilen zur Ansteuerung des Hydraulikzylinders ist,
- das Hydraulikfluid der hydraulischen Antriebseinheit eine elektrorheologische Flüssigkeit ist, und
- das mindestens eine Steuerventil für den Hydraulikzylinder ein elektrorheologisches (=ER-) Ventil (1) ist mit
= mindestens einem Durchfluss-Spalt (2) für die elektrorheologische Flüssigkeit und
= einer Plattenkondensator-Anordnung (K) zum Anlegen eines elektrischen Steuerfeldes über den Durchfluss-Spalt (2).

## Beschreibung

Die Erfindung betrifft eine Spritzgießmaschine mit den im Oberbegriff des Patentanspruches 1 angegebenen Merkmalen sowie eine hydraulische Antriebseinheit für eine entsprechende Werkzeugmaschine gemäß Oberbegriff des Patentanspruches 11.

Eine gattungsgemäße Spritzgießmaschine weist die üblichen Komponenten eines solchen Maschinentyps auf, nämlich eine Einspritzeinheit mit einer Plastifizierschnecke und Antriebseinheiten für die Erzeugung der Bewegung der Einspritzeinheit selbst und des Einspritz- und Nachdruckhubes der Plastifizierschnecke. Ferner sind üblicherweise eine feste und eine bewegliche Werkzeugaufspannplatte vorgesehen, an denen die jeweiligen Halbformen angebracht sind. Gegebenenfalls kann bei einer sogenannten Drei-Platten-Maschine noch eine weitere Abstützplatte für die die bewegliche Werkzeugaufspannplatte verschiebende Formschlusseinheit vorgesehen sein. Letztere weist eine Antriebseinheit zur Erzeugung der Formschließ- und -öffnungsbewegung der beweglichen Werkzeugaufspannplatte und für das Aufbringen der sogenannten Werkzeug-Schließkraft beim Einspritzen auf. Schließlich ist eine Werkstück-Auswerfereinrichtung mit einer entsprechenden Antriebseinheit an einer Werkzeugaufspannplatte vorgesehen.

Spritzgießmaschinen waren bezüglich ihrer Antriebseinheiten ursprünglich als hydraulische Maschinen konzipiert, seit geraumer Zeit sind bestimmte Antriebsachsen durch elektromechanische Antriebsaggregate wie Servomotoren gesteuert worden. Auch sind sogenannte vollelektrische Maschinen bereits üblich.

Die vorliegende Erfindung bezieht sich auf Spritzgießmaschinen, bei denen mindestens eine der Antriebseinheiten hydraulisch ausgeführt ist, und dementsprechend eine Hydraulikpumpe, ein Hydraulikzylinder sowie ein oder mehrere Steuerventile zur Ansteuerung des Hydraulikzylinders vorgesehen sind.

Bei den bekannten hydraulischen Antriebseinheiten werden die Bewegungsgeschwindigkeiten dieser jeweils anzutreibenden Achse der Spritzgießmaschine über Proportional-Servoventile oder Regelpumpen gesteuert. Übliche Null-Eins-Ventile realisieren dabei Einschalt- bzw. Ausschaltverzögerungen von 30 bis 60 ms. In ähnlichen Zeitbereichen liegt die Dynamik von Regelpumpen. Es sind zwar Servoventile mit kürzeren Reaktionszeiten bekannt, diese sind jedoch sehr kostenaufwändig und mit Reaktionszeiten im Bereich von 15 bis 20 ms ebenfalls noch nicht optimal für die Belange einer Spritzgießmaschine.

Solche Maschinen sind geprägt durch die Tatsache, dass durch die Dynamik der Ansteuerung der einzelnen Achsen die Präzision und Reaktionsgeschwindigkeit der Maschine bestimmt wird. Beispielsweise sind Zeitverzögerungen der hydraulischen Aktoren während des Umschaltens bei der Plastifizierschnecke von Spritzdruck auf Nachdruck von Nachteil. Die Dynamik der Schneckenbewegung muss in der Nähe dieses Umschaltpunktes stark reduziert werden, um Drucküberschwinger im Werkzeug zu vermeiden. Letztere würden sogenannte Überspritzungen oder "Schwimmhäute" im Bereich der Form-Teilungsebene hervorrufen, das Spritzgussmaterial selbst schädigen und darin Spannungen hervorrufen, die später zu einem Verziehen des hergestellten Produktes führen können. Übereinstimmende Probleme treten auch in elektromagnetischen Spritzgießmaschinen auf, da die darin eingesetzten elektrischen Rotationsantriebe unvermeidbare Masseträgheitsmomente besitzen und damit ebenfalls nicht ausreichend schnell und dynamisch zwischen zwei Betriebszuständen geschaltet werden können.

Ausgehend von der geschilderten Problematik des Standes der Technik liegt der Erfindung die Aufgabe zugrunde, eine Spritzgießmaschine mit mindestens einer hydraulischen Antriebseinheit so zu verbessern, dass die Antriebsdynamik insbesondere im Hinblick auf die Schaltzeiten der darin eingesetzten Ventile drastisch verbessert werden kann.

Diese Aufgabe wird durch die im Kennzeichnungsteil des Anspruches 1 bzw. 11 angegebenen Merkmale dadurch gelöst, dass
- das Hydraulikfluid der hydraulischen Antriebseinheit eine elektrorheologische Flüssigkeit ist, und
- das mindestens eine Steuerventil für den Hydraulikzylinder ein elektrorheologisches (=ER-) Ventil ist mit
   = mindestens einem Durchfluss-Spalt für die elektrorheologische Flüssigkeit und
   = einer Kondensator-Anordnung zum Anlegen eines elektrischen Steuerfeldes über den Durchfluss-Spalt.

Der besondere Vorteil von hydraulischen Antriebseinheiten auf der Basis von ER-Ventilen liegt in der außergewöhnlich hohen Dynamik der Ventile, die für den Stellbereich von 0 bis 100% in der Größenordnung von 2 bis 4 ms liegen. Auf der Basis dieses Steuerventilverhaltens lassen sich sehr exakte Positionierungen mit Hilfe der so angesteuerten Hydraulikzylinder vornehmen, die zudem noch wesentlich dynamischer angefahren werden können. Insgesamt ergeben die stark verkürzten Reaktionszeiten verbunden mit geringen Massen der beteiligten Komponenten eine Gesamtdynamik des Antriebssystems, die weder von üblichen hydraulischen, noch von elektrischen Spritzgießmaschinen erreicht wird. Speziell auf der Einspritzseite sind durch die erfindungsbedingten Eigenschaften Spritzdruck-Nachdruck-Kurvenübergänge möglich, die mindestens fünfmal schneller gegenüber Servo-geregelten Spritzgießmaschinen sein können. Darüber hinaus ist die Positioniergenauigkeit bei der Formschlusseinheit selbst bei Schnelllaufanwendungen identisch mit vergleichbaren elektromechanischen Lösungen bei deutlich geringeren Kosten. Von Vorteil dabei ist, dass solche Schnelllaufanwendungen auf Grund der auf ER-Ventilen basierten Technologie konstruktiv aus Standardmaschinen ableitbar sind. Schließlich weist das gesamte System eine hohe Energiedichte auf, die mit der hydraulischer Spritzgießmaschinen vergleichbar ist.

Gemäß einer bevorzugten Ausführungsform wird mindestens einer Hydraulikpumpe ein Hydraulikfluidspeicher für unter Druck stehende elektrorheologische Flüssigkeit zugeordnet. Die damit verbundene Bereitstellung der elektrorheologischen Flüssigkeit führt dazu, dass auf Grund der Pumpen-Speicherkombination auf der Einspeisungsseite keine hohen Lastspitzen auftreten. Die Pumpe kann im Wesentlichen bei Grundlast laufen und lässt sich auf eine konstante Leistung durch die Nachregelung des Schwenkwinkels der jeweiligen Ladesituation des Hydraulikfluidspeichers einstellen. Der Motor kann damit ständig unter Nennlast betrieben werden, wodurch sich für den Maschinennutzer optimale Energiebezugskonditionen von Energielieferanten ergeben.

Gemäß weiteren bevorzugten Ausführungsformen sieht die Erfindung die situationsangepasste Verteilung der Hydraulikpumpe(n) gegebenenfalls mit Hydraulikspeicher(n) für alle Antriebseinheiten von Einspritz- und Formschlusseinheit als Zentralaggregat oder die Verteilung von Hydraulikpumpen mit Hydraulikspeicher einzeln oder in Untergruppen auf verschiedene Antriebseinheiten vor.

Die Hydraulikzylinder sind vorzugsweise als Zwei-Wege-Zylinder ausgebildet, ermöglichen also einen sogenannten "eingespannten Betrieb" des Zylinders. Die Ansteuerung kann jeweils über eine H-Ventil-Vollbrücke bestehend aus vier ER-Ventilen bestehen. Diese Anordnung ist konzeptionell vergleichbar mit einem elektrischen Servoantrieb, bei dem der Elektromotor in der Diagonale der IGBT-Brücke zwischen der positiven und negativen Betriebsspannung liegt. Insoweit können grundsätzliche steuerungstechnische Aspekte von den bekannten Maschinen mit elektrischem Servoantrieb auf die erfindungsgemäße Maschine übertragen werden. Damit erleichtert sich die steuerungstechnische Konfiguration dieser neuartigen Maschinen erheblich.

Gemäß einer weiteren bevorzugten Ausführungsform können die ER-Ventile direkt in die Hydraulikzylinder integriert werden. Damit lassen sich besonders kompakte Antriebseinheiten realisieren.

Weitere bevorzugte Ausführungsformen der Erfindung beziehen sich auf die Ausbildung der ER-Ventile als Ringspaltventile. Übliche Spaltweiten liegen im Bereich zwischen 0,2 und 1,0 mm und sind damit toleranztechnisch wesentlich einfacher beherrschbar als die Herstellung eines Servoventils, bei denen die entsprechenden Toleranzforderungen in der Regel im Mikrometer-Bereich liegen. Bei einer geschickten Anordnung der Ringspalte der ER-Ventile, etwa vorzugsweise durch Zusammensetzung der ER-Ventile als Ventilgruppen aus einer Vielzahl vorzugsweise parallel geschalteter Einzel-Ventileinheiten, lassen sich Öffnungsverhältnisse von > 0,5 realisieren. Damit liegen die Abmessungen der ER-Ventilaktoren im Bereich vergleichbarer, allerdings wesentlich trägerer Hydraulikventile. Das große Öffnungsverhältnis ist in diesem Zusammenhang wichtig für einen niedrigen Strömungswiderstand im nicht geschalteten, offenen Zustand des Ventils.

Weitere bevorzugte Ausführungsformen beziehen sich auf die Zusammenfassung mindestens zweier ER-Ventile zu einem Ventilblock, der dann für die Ansteuerung der jeweiligen Anzahl von Achsen der Maschine zuständig ist. Damit lassen sich konstruktiv vorteilhafte Baugruppen für die Ansteuerung der Maschinenachsen realisieren.

Weitere Merkmale, Einzelheiten und Vorteile der Erfindung ergeben sich aus der nachfolgenden Beschreibung, in der Ausführungsbeispiele anhand der beigefügten Zeichnungen näher erläutert werden. Es zeigen:
- Fig. 1: einen schematischen Längsschnitt durch eine elektrorheologische Einzel-Ventileinheit,
- Fig. 2: einen Querschnitt eines elektrorheologischen Ventils,
- Fig. 3: ein Hydraulikschema der Ansteuerung eines Zwei-Wege-Hydraulikzylinders,
- Fig. 4 und 5: perspektivische Ansichten einer Spritzgießmaschine in zwei unterschiedlichen Ausführungsformen,
- Fig. 6: eine perspektivische Teilansicht einer Spritzgießmaschine in einer weiteren Ausführungsform,

- Fig. 7: ein Zeit-Druck-Diagramm zur Darstellung des Spritzdruck- bzw. Nachdruckverhaltens einer Spritzgießmaschine und
- Fig. 8: eine perspektivische, teilweise weggebrochene Darstellung eines ER-Ventilblocks für die Ansteuerung zweier Achsen.

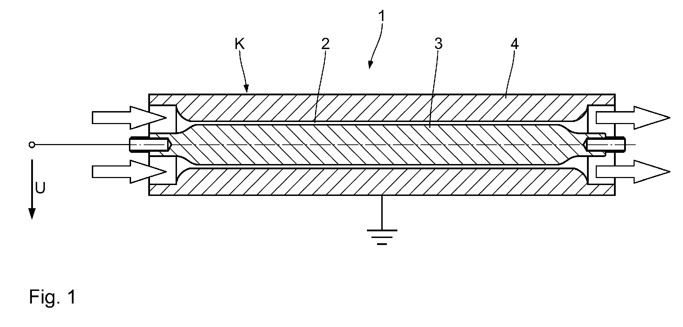

Anhand von Fig. 1 soll zuerst die Funktionsweise einer elektrorheologisch arbeitenden Ventileinheit 1 erläutert werden. Ausgangspunkt ist die Verwendung einer elektrorheologischen Flüssigkeit als hydraulisches Medium. Derartige ER-Flüssigkeiten verändern ihre Rheologie, also ihre Fließeigenschaften, in Abhängigkeit eines angelegten elektrischen Feldes. Um eine schaltbare Ventilfunktion zu realisieren wird nun ein Ventilspalt - im Ausführungsbeispiel gemäß Figur 1 ein Ringspalt 2 - in einer Art Plattenkondensator-Anordnung K zwischen einer zentralen Stabelektrode 3 und dem diese umgebenden, zylinderförmigen Gehäuse 4 angelegt. Durch diesen Ringspalt strömt die ER-Flüssigkeit bei nicht geschaltetem Ventil mit einer Charakteristik, die herkömmlichen Hydraulikfluiden entspricht, sofern die ER-Flüssigkeit eine gleiche oder geringere dynamische Viskosität besitzt.

Bei Anlegen eines Potentials U an der Stabelektrode 3 bildet sich über den Ringspalt 2 hinweg zum geerdeten Gehäuse 4 durch diese Kondensator-Anordnung K ein elektrisches Feld aus, durch das sich die Viskosität der ER-Flüssigkeit erhöht. Bei genügend hoher Zähflüssigkeit wird die Flüssigkeitsleitung durch den Ringspalt 2 unmöglich, der Fluss der Hydraulikflüssigkeit wird damit unterbrochen, das Ventil also auf "Sperren" geschaltet.

Um umfangreiche Ausführungen zur Auslegung der ER-Ventileinheit 1 zu vermeiden, wird auf einen Fachartikel von M. Zaun "Antriebe mit kurzen Reaktionszeiten", O+P 5/2005, Seiten 2 bis 6, verwiesen, wo Zylinderantriebe auf Basis elektrorheologischer Flüssigkeiten ausführlich dargelegt sind. Es ist lediglich festzuhalten, dass die Spaltweiten des Ringspalts 2 etwa im Bereich zwischen 0,2 und 1 mm liegen können. Feldstärken des elektrischen Feldes zwischen Elektrode 3 und Gehäuse 4 liegen aktuell in der Größenordnung von 3000 bis 5000 V/mm. Als ER-Hydraulikfluid kann beispielsweise das Produkt "RheOil" der Fludicon GmbH, Darmstadt, eingesetzt werden.

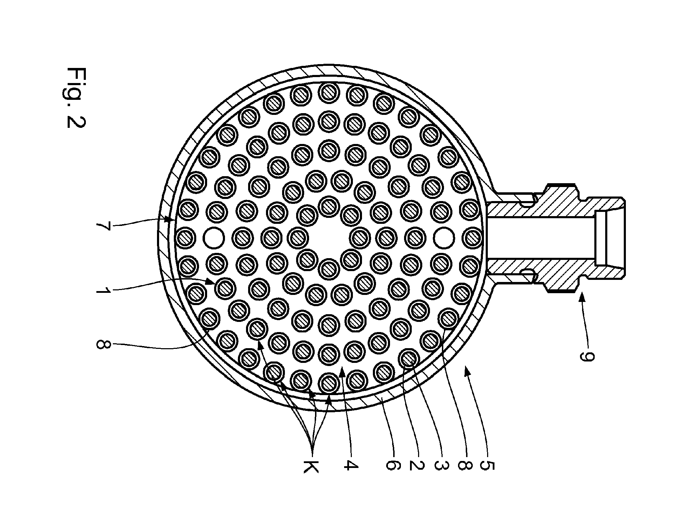

Fig. 2 zeigt die Gruppierung einer Vielzahl von Ventileinheiten 1 zu einem ER-Ventil 5. In einem zylinderförmigen Außengehäuse 6 ist ein Einsatzkörper 7 mit einer Vielzahl axial paralleler Längsbohrungen 8 eingebracht. Der Einsatzkörper 7 bildet die Außenelektrode bzw. Masse der einzelnen Ventileinheiten 1. In die Längsbohrungen 8 ist jeweils eine als Hochspannungselektrode ausgebildete Stabelektrode 3 eingesetzt, wobei zwischen dieser und der Innenwand der Längsbohrung 8 der Ringspalt 2 verbleibt. An den Stirnenden des Einsatzkörpers 7 verbleibt jeweils ein Strömungsraum, der mit dem Zufluss 9 bzw. dem in Fig. 2 nicht erkennbaren, in Betrachtungsrichtung mit dem Zufluss fluchtenden Abfluss in Verbindung steht. Die dargestellte Konfiguration des ER-Ventils 5 weist ein großes Öffnungsverhältnis von 0,5 auf. Die gesamte Ventilanordnung ist durch einen geringen Strömungswiderstand und einen einfachen Aufbau charakterisiert.

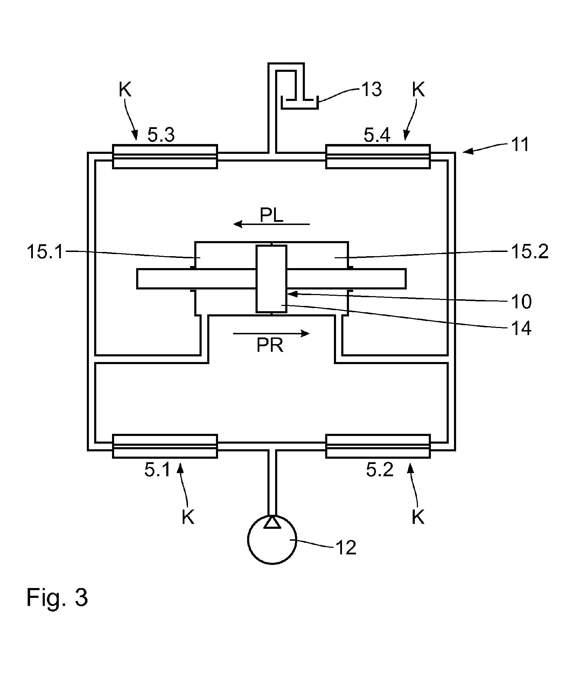

In Fig. 3 ist die Ansteuerung eines als Zwei-Wege-Zylinder 10 ausgebildeten Hydraulikzylinders mit Hilfe einer H-Vollbrücke 11 dargestellt. Ausgehend von einer Hydraulikpumpe 12, die Hydraulikflüssigkeit von einem Tank 13 zieht, werden über jeweils wie parallel geschaltete Ventile 5.1, 5.2 die zwei beiderseits des Kolbens 14 liegenden Arbeitsräume 15.1, 15.2 des Hydraulikzylinders 10 mit Hydraulikflüssigkeit versorgt. Beide Arbeitsräume stehen ferner über wiederum jeweils ein ER-Ventil 5.3, 5.4 mit dem Tank 13 in Verbindung.

Zur Betätigung des Zylinders in Pfeilrichtung PL in Fig. 3 bleibt das Ventil 5.2 offen, wird also nicht angesteuert, wogegen die Kondensator-Anordnung K das Ventil 5.1 mit Spannung versorgt und damit sperrt. Wechselseitig sind das Ventil 5.3 offen und das Ventil 5.4 geschlossen. Bei dieser Konstellation wird der Kolben 14 in Pfeilrichtung PL bewegt.

Für eine hochdynamische Umsteuerung können innerhalb weniger Millisekunden die Ventile 5.1 bis 5.4 genau entgegengesetzt angesteuert werden, sodass die Ventile 5.1 und 5.4 geöffnet und die Ventile 5.2 und 5.3 geschlossen sind. Der Kolben 14 fährt dann in die entgegengesetzte Richtung PR.

Die in dem Hydraulikkreis verwendete elektrorheologische Flüssigkeit als Hydraulikmedium sollte nicht abrasiv sein. Um niedrige elektrische Verluste über das elektrische Feld zwischen der Elektrode 3 und dem Gehäuse 4 zu realisieren, ist das Hydraulikfluid ferner isolierend.

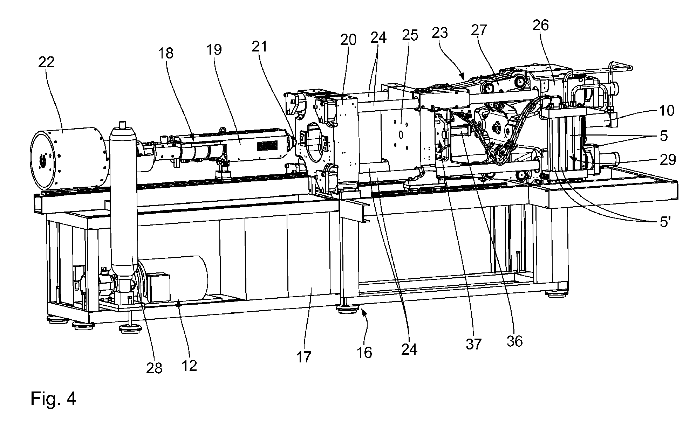

In den Fig. 4 bis 6 werden nun verschiedene Ausführungsformen von Spritzgießmaschinen erläutert, die mit ER-Ventilen versehen und mit elektrorheologischen Flüssigkeiten als Hydraulikfluid betrieben werden. So zeigt Fig. 4 eine Spritzgießmaschine mit einem üblichen Maschinengestell 16, in dem ein Schaltschrank 17 mit einer entsprechenden Steuerung für die Maschinenkomponenten untergebracht ist. Auf dem Maschinengestell 16 ist zum einen die Einspritzeinheit 18 mit einem Plastifizierzylinder 19 und der an die feste Werkzeugaufspannplatte 20 durch eine Verfahrbewegung der Einspritzeinheit 18 andockbaren Einspritzdüse 21 angeordnet. Am äußeren Ende der Einspritzeinheit 18 ist ein elektromechanischer oder hydraulischer Antrieb 22 für die Drehbewegung der nicht näher dargestellten Schnecke im Plastifizierzylinder 19 gezeigt.

Auf dem Maschinengestell 16 ist ferner die als Ganzes mit 23 bezeichnete Formschlusseinheit angeordnet, die eine auf horizontalen Säulen 24 relativ zur festen Werkzeugaufspannplatte 20 bewegliche Werkzeugaufspannplatte 25 aufweist. Zwischen den Werkzeugaufspannplatten 20, 25 ist die in den Zeichnungen nicht näher dargestellte Spritzgießform mit den beiden Formhälften befestigt. Die Säulen 24 sind in einer Stützplatte 26 auf der der festen Werkzeugaufspannplatte 20 abgewandten Rückseite der beweglichen Werkzeugaufspannplatte 25 gelagert. Zwischen der Stützplatte 26 und der beweglichen Werkzeugaufspannplatte 25 ist ein hydraulisch angetriebener Kniehebelmechanismus 27 vorgesehen, mit dessen Hilfe das Öffnen und Schließen der beweglichen Werkzeugaufspannplatte 25 und die Zuhaltung der Form während des Einspritzvorganges bewerkstelligt wird.

Der Kniehebelmechanismus 27 ist über einen Hydraulikzylinder 10 betätigbar, der wie anhand von Fig. 3 näher erläutert über ER-Ventile 5 ansteuerbar ist. Das elektrorheologische Hydraulikfluid selbst wird über eine unterhalb der Einspritzeinheit 21 im Maschinengestell 16 montierte Hydraulikpumpe 12 bereitgestellt, der ein Hydraulikspeicher 28 zugeordnet ist.

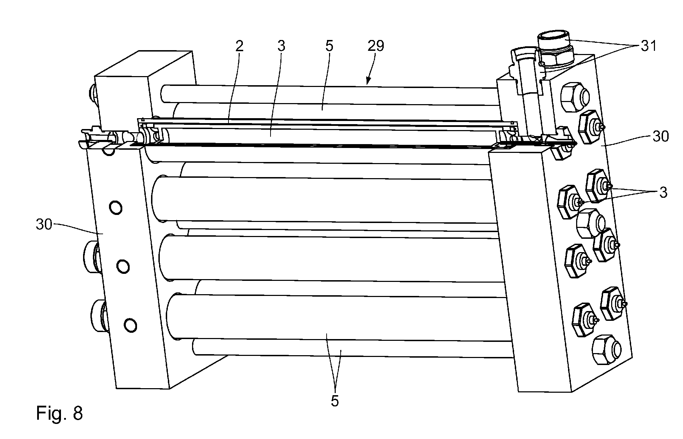

Wie ferner in Fig. 4 angedeutet ist, sind weitere ER-Ventile 5' mit kleineren Hydraulikzylindern 36 an der beweglichen Werkzeugaufspannplatte 20 gekoppelt, sodass dort hydraulisch angesteuerte Auswerfer 37 für die Werkstücke ebenfalls betätigt werden können. Wie aus Fig. 8 deutlich wird, können die in Fig. 4 gezeigten ER-Ventile 5, 5' zu einem Ventilblock 29 zusammengefasst sein, der damit für die Betätigung der Hydraulikzylinder zweier Achsen der Spritzgießmaschine - also etwa Formschluss und Auswerferhub wie in Fig. 4 - ausgelegt ist. Dazu sind jeweils ER-Ventile 5 kopfseitig in Montagehaltern 30 zusammengefasst, die die mechanische Befestigung der einzelnen Komponenten der ER-Ventile 5 übernehmen, die isolierte Spannungsversorgung der Elektroden 3 gewährleisten und die Fluidleitungen 31 aufnehmen.

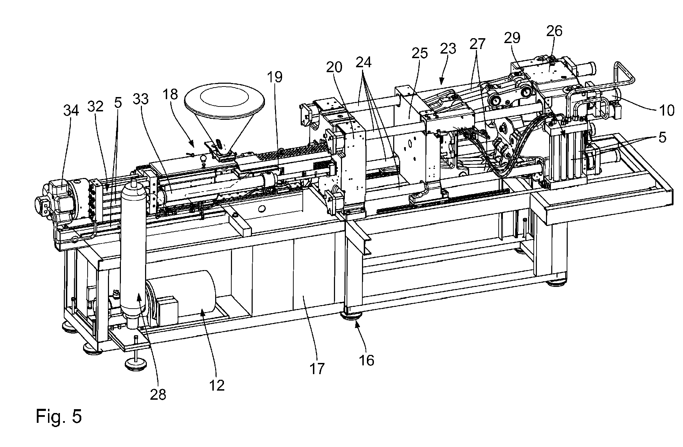

Bei der in Fig. 5 gezeigten Ausführungsform einer Spritzgießmaschine ist neben dem Ventilblock 29 im Bereich der Formschlusseinheit 23 ein weiterer solcher Ventilblock 32 im Bereich der Einspritzeinheit 18 vorgesehen, über den der Hydraulikzylinder 33 für die Bewegung der Einspritzeinheit 18 sowie der Hydraulikantrieb 34 für die Einspritz- und Rückzugbewegung der Plastifizierschnecke ansteuerbar sind. Die Hydraulikpumpe 12 mit dem Hydraulikspeicher 28 versorgt dabei über nicht näher dargestellte Hydraulikfluidleitungen beide Ventilblöcke 29 und 32 mit dem elektrorheologischen Hydraulikfluid.

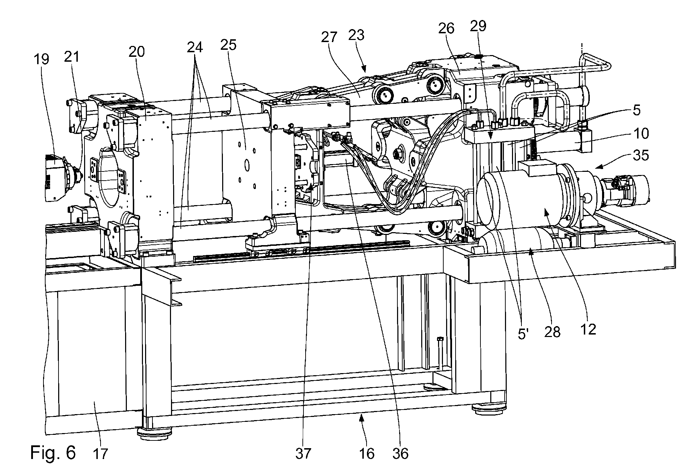

Bei der in Fig. 6 gezeigten Ausführungsform ist losgelöst von der Einspritzeinheit eine gesonderte Hydraulikbaugruppe 35 für die Formschlusseinheit 23 und die Auswerfer 37 vorgesehen. Dementsprechend ist diese Hydraulikbaugruppe 35 auf dem Maschinengestell 16 neben dem ER-Ventilblock 29 montiert und weist einen eigenen Hydraulikspeicher 28 und eine eigene Hydraulikpumpe 12 auf.

Im Übrigen entsprechen die in den Fig. 5 und 6 gezeigten Spritzgießmaschinen der Ausführungsform gemäß Fig. 4. Übereinstimmende Komponenten sind mit identischen Bezugszeichen versehen und es kann auf die entsprechende Beschreibung der Fig. 4 zur Vermeidung von Wiederholungen verwiesen werden.

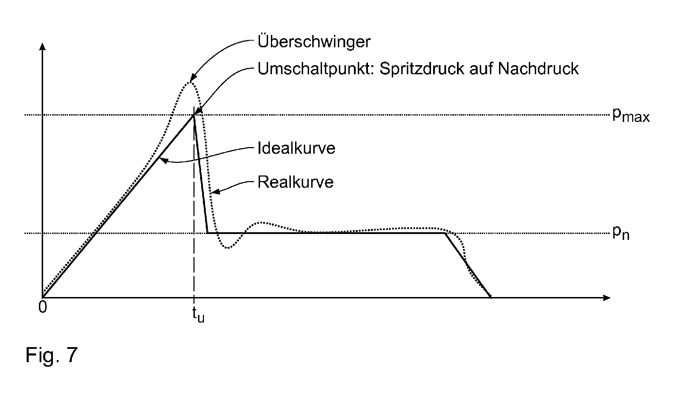

Fig. 7 macht schließlich die Vorzüge der Realisierung des Antriebs einer Spritzgießmaschine mit Hilfe elektrorheologischer Hydraulikkomponenten am Beispiel des Schneckenvorschubes und -rückzuges deutlich. So ist in diesem Diagramm der von der Schnecke erzeugte Druck in zeitlicher Abhängigkeit während eines Einspritzvorganges aufgezeichnet. So steigt beim Einspritzvorgang ab t=0 bis zum Zeitpunkt t=tᵤ der Spritzdruck bis zu seinem Maximal-Sollwert pₘₐₓ. Bei üblichen, vergleichsweise trägen Antrieben besteht die Gefahr von Überschwingern (siehe punktierte Linie in Fig. 7), sodass der maximal erlaubte Spritzdruck mit den eingangs geschilderten negativen Auswirkungen überschritten wird. Mit Hilfe der schnellen ER-Ventile kann demgegenüber die durchgezogene Idealkurve deutlich besser erreicht werden. Bei dieser kann sehr schnell der Spritzdruck auf den Nachdruckwert pₙ heruntergesteuert werden. Bei der punktierten "Realkurve" können sich auch hier Unterschwinger einstellen, die ebenso nachteilig sind wie Überschwinger.

## Patentansprüche

1. Spritzgießmaschine umfassend
- eine Einspritzeinheit (18) mit einer Plastifizierschnecke und Antriebseinheiten (34) für die Bewegung der Einspritzeinheit (18) und für den Einspritz- und Nachdruckhub der Plastifizierschnecke,
- eine feste und eine bewegliche Werkzeugaufspannplatte (20, 25),
- eine Formschlusseinheit (23) mit einer Antriebseinheit (10) zur Erzeugung der Formschließ- und -öffnungsbewegung der beweglichen Werkzeugaufspannplatte (25) und der Werkzeug-Schließkraft beim Einspritzen, und
- eine Antriebseinheit (36) für eine Werkstück-Auswerfereinrichtung (37),
wobei mindestens eine der Antriebseinheiten (10, 34, 36) eine hydraulische Antriebseinheit mit einer Hydraulikpumpe (12), einem Hydraulikzylinder (10, 34) und einem oder mehreren Steuerventilen (5) zur Ansteuerung des Hydraulikzylinders (10, 34) ist,
**dadurch gekennzeichnet, dass**
- das Hydraulikfluid der hydraulischen Antriebseinheit (10, 34, 36) eine elektrorheologische Flüssigkeit ist, und
- das mindestens eine Steuerventil für den Hydraulikzylinder (10, 34, 36) ein elektrorheologisches (=ER-) Ventil (5) ist mit
= mindestens einem Durchfluss-Spalt (2) für die elektrorheologische Flüssigkeit und
= einer Plattenkondensator-Anordnung (K) zum Anlegen eines elektrischen Steuerfeldes über den Durchfluss-Spalt (2).

2. Spritzgießmaschine nach Anspruch 1, **dadurch gekennzeichnet, dass** der mindestens einen Hydraulikpumpe (12) ein Hydraulikfluidspeicher (28) für die unter Druck stehende elektrorheologische Flüssigkeit zugeordnet ist.

3. Spritzgießmaschine nach Anspruch 1 oder 2, **dadurch gekennzeichnet, dass** eine zentrale Hydraulikpumpe (12) gegebenenfalls mit Hydraulikspeicher (28) für mehrere, vorzugsweise für alle Antriebseinheiten (10, 34, 36) von Einspritz- und Formschlusseinheit (18, 23) vorgesehen ist.

4. Spritzgießmaschine nach Anspruch 1 oder 2, **dadurch gekennzeichnet, dass** jeder Antriebseinheit (10, 34, 36) der Einspritz-, Formschlusseinheit (18, 23) und/oder der Auswerfereinrichtung (37) einzeln oder in Untergruppen eine gesonderte Hydraulikpumpe (12) gegebenenfalls mit Hydraulikspeicher (28) zugeordnet ist.

5. Spritzgießmaschine nach einem der vorgenannten Ansprüche, **dadurch gekennzeichnet, dass** die Hydraulikzylinder (10, 34) als Zwei-Wege-Zylinder ausgebildet und jeweils über eine H-Ventil-Vollbrücke (11) bestehend aus vier ER-Ventilen (5.1 - 5.4) angesteuert sind.

6. Spritzgießmaschine nach einem der vorgenannten Ansprüche, **dadurch gekennzeichnet, dass** die ER-Ventile in die Hydraulikzylinder integriert sind.

7. Spritzgießmaschine nach einem der vorgenannten Ansprüche, **dadurch gekennzeichnet, dass** die ER-Ventile als Ringspaltventile (5) ausgebildet sind.

8. Spritzgießmaschine nach Anspruch 7, **dadurch gekennzeichnet, dass** die Ringspaltventile (5) einen potentialführenden Kernstab (3) und ein diesen im Ringspaltabstand umgebendes geerdetes Gehäuse (4) aufweisen.

9. Spritzgießmaschine nach einem der vorgenannten Ansprüche, **dadurch gekennzeichnet, dass** die ER-Ventile (5) als Ventilgruppen aus einer Vielzahl vorzugsweise parallel geschalteter Einzel-Ventileinheiten (1) zusammengesetzt sind.

10. Spritzgießmaschine nach einem der vorgenannten Ansprüche, **dadurch gekennzeichnet, dass** mindestens zwei ER-Ventile (5) für jeweils eine anzutreibende Achse der Spritzgießmaschine in einem Ventilblock (29) zusammengefasst sind.

11. Hydraulische Antriebseinheit für eine Werkzeugmaschine, insbesondere Spritzgießmaschine, mit einer Hydraulikpumpe (12), einem Hydraulikzylinder (10, 34, 36) und einem oder mehreren Steuerventilen (5) zur Ansteuerung des Hydraulikzylinders (10, 34),
**dadurch gekennzeichnet, dass**
- das Hydraulikfluid der hydraulischen Antriebseinheit (10, 34, 36) eine elektrorheologische Flüssigkeit ist, und
- das mindestens eine Steuerventil für den Hydraulikzylinder ein elektrorheologisches (=ER-) Ventil (5) mit
= mindestens einem Durchfluss-Spalt (2) für die elektrorheologische Flüssigkeit und
= einer Plattenkondensator-Anordnung (K) zum Anlegen eines elektrischen Steuerfeldes über den Durchfluss-Spalt (2) ist.
